# EUROPEAN PATENT SPECIFICATION

(11) **EP 2 567 751 B1**
(45) Date of publication and mention of the grant of the patent: **27.04.2016**
(21) Application number: 12180722.6
(22) Date of filing: 16.08.2012
(51) Int. Cl.: B01J 20/04, B01J 20/06, B01J 20/28, B01J 20/02, B01D 53/02, B01D 53/04

(54) **CO2 Sorbent**
CO2-Sorptionsmittel
Sorbant de CO2

(30) Priority: 12.09.2011 JP 2011197833
(43) Date of publication of application: 13.03.2013
(73) Proprietor: Hitachi, Ltd., Tokyo (JP)
(72) Inventor: Yoshikawa, Kohei, Tokyo, 100-8220 (JP); Sato, Hiroki, Tokyo, 100-8220 (JP); Kaneeda, Masato, Tokyo, 100-8220 (JP); Kanno, Shuichi, Tokyo, 100-8220 (JP)
(74) Representative: Beetz & Partner mbB

(56) References cited:
- EP-A1- 0 388 567
- EP-A2- 0 239 478
- EP-A2- 1 005 904
- WO-A1-2010/096871
- JP-A- 10 272 336
- JP-A- 2004 358 390
- US-A1- 2011 162 525

## Description

### PRIORITY STATEMENT

The present application hereby claims priority under 35 U.S.C. 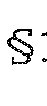 119 on Japanese patent application number JP 2011-197833 filed Sep. 12, 2011 the entire contents of which is hereby incorporated herein by reference.

### FIELD OF THE INVENTION

The present invention concerns a material for sorbing carbon dioxide.

### BACKGROUND

Global warming due to emission of a greenhouse gas is a world wide problem. The greenhouse gas includes carbon dioxide (CO₂), methane (CH₄), chlorofluorocarbons (CFCs), etc. Among them, carbon dioxide gives a most significant effect and it is an urgent subject to reduce the emission of carbon dioxide. The countermeasure for the subject includes, for example, chemical absorption method, a physical absorption method, a membrane separation method, an adsorptive separation method, a cryogenic separation method, etc. They include a separation method using a CO₂ sorbent.

Japanese Unexamined Patent Application Publication No. 2004-358390 describes a carbon dioxide absorbent of synthesizing oxides of Bi and one of Mg, Ca, Sr, Ba, Cs, Y and lanthanoides by a mechanical alloying method.

Japanese Unexamined Patent Application Publication No. H10-272336 describes a carbon dioxide absorbent in which a perovskite composite oxide containing 44.4 mol% or more and 50 mol% or less in total of Ba, Sr, Ca, Cs, K, La, Pr, Ce, Nd, Gd, Er, Y, Pb, and Bi and 50 mol% or more and 55.6 mol% or less in total of Ti, Mn, Fe, Co, Ni, Cu, Al, Sn, and Zr is reacted with CO₂, thereby absorbing CO₂ as carbonates.

European patent applications EP0388567 and EP0239478 describe Ce oxides with an average pore size of less than 60 Angstrom.

### SUMMARY

However, the mechanical alloying method described in Japanese Unexamined Patent Application Publication No. 2004-358390 is a mechanical alloying method and it is difficult to form micropores. Further, the perovskite described in Japanese Unexamined Patent Application Publication No. H10(1998)-272336 requires high firing temperature of about 700°C and no micropores are obtained since they are sintered.

The present invention has been achieved in view of the foregoing subjects and intended to provide a CO₂ sorbent capable of efficiently sorbing carbon dioxide by utilizing micropores.

The present invention provides a CO₂ sorbent for sorbing and separating carbon dioxide from a gas containing carbon dioxide as defined by claim 1.

The present invention can provide a CO₂ sorbent capable of efficiently sorbing carbon dioxide.

### BRIEF DESCRIPTION OF THE DRAWINGS

Fig. 1 is a graph showing a relation between an average pore size of CO₂ sorbents only comprising a Ce oxide and an amount of carbon dioxide sorption;
Fig. 2 is a graph showing a relation between a specific surface area of CO₂ sorbents only comprising a Ce oxide and an amount of carbon dioxide sorption;
Fig. 3 is a graph showing nitrogen adsorption isotherms of CO₂ sorbents only comprising a Ce oxide at -196°C;
Fig. 4 is a graph showing a correlation between nitrogen absorption ratio (U_{0.01}/ U _{0.99}) of CO₂ sorbents only comprising a Ce oxide and an amount of carbon dioxide sorption per unit surface area at -196°C;
Fig. 5 is a graph showing a relation between an average pore size and an amount of carbon dioxide sorption of CO₂ sorbents comprising an oxide containing Ce and, further, at least one element selected from K, Mg, Al, and Pr;
Fig. 6 is a flow showing processing of a boiler exhaust gas; and
Fig. 7 shows an example of sorbing and recovering carbon dioxide using a CO₂ sorbing column.

### DETAILED DESCRIPTION

As a result of earnest study on the subjects described above, the present inventors have found that a CO₂ sorbent containing Ce oxide and having an average pore size of 60 Å or less can efficiently sorb carbon dioxide. It is considered that since the average pore size is small, the frequency of contact between carbon dioxide and pore wall is improved to promote carbon dioxide sorbing reaction.

A CO₂ sorbent containing many micropores shows less increase in the nitrogen adsorption amount to nitrogen relative pressure P/P₀ in a nitrogen adsorption test at -196°C. That is, the nitrogen adsorption ratio at different P/P₀ can be used as an index of pore refinement. Carbon dioxide can be sorbed efficiently when the nitrogen absorption amount U_{0.01} at a nitrogen relative pressure P/P₀ = 0.01 and the nitrogen absorption amount U_{0.99} at P/P₀ = 0.99 satisfy a relation: U_{0.01}/_{0.99} > 0.35.

Further, carbon dioxide can be sorbed efficiently when the specific surface area of the CO₂ is 100 m²/g or more. It is considered that this is attributable to increase in exposed carbon dioxide sorbing points.

As starting materials for the CO₂ sorbent, various compounds such as nitrate compounds, chlorides, acetate compounds, complex compounds, hydroxides, carbonate compounds, and organic compounds, metals, and metal oxides can be used.

As the method of preparing the CO₂ sorbent, physical preparing method such as an impregnation method, a kneading method, a coprecipitation method, a sol-gel method, an ion exchange method, and an evaporation method, or a preparation method utilizing chemical reaction, etc. can be used.

The CO₂ sorbent ingredients may also be supported on a porous material such as alumina, silica, and zeolite. In this case, the physical preparation methods such as an impregnation method, a kneading method, a coprecipitation method, a sol-gel method, an ion exchange method, and vapor deposition method, and preparation methods utilizing chemical reaction can be used. Among them, contact between the support and the CO₂ sorbent ingredient becomes intact, and sintering, etc. can be prevented by using the preparation method utilizing the chemical reaction.

The CO₂ sorbent can efficiently sorb carbon dioxide when it contains K, Mg, Al, and Pr elements in addition to Ce. The total content of the elements is preferably 0.01 or more and 1.00 or less by molar ratio based on Ce as an elemental metal.

The form of the CO₂ sorbent can be adjusted properly depending on the use and includes pellet, plate, particle, powder, or like other shape. When the temperature of the CO₂ sorbent increases due to heat generation upon sorption of carbon dioxide and the carbon dioxide sorbing performance is lowered, the CO₂ sorbent may be supported on a material such as cordierite, silicon carbide (SiC), and stainless steel. Then, heat conduction can be promoted, and temperature increase of the CO₂ sorbent can be suppressed to maintain the sorbing performance.

The CO₂ sorbent may be used at any temperature, and used preferably at 600°C or lower. If the temperature of the CO₂ sorbent is 600°C or higher, the performance of the CO₂ sorbent is lowered, for example, due to decrease in the specific surface area by sintering.

The CO₂ sorbent is applicable to any kind of gases so long as the gas contains carbon dioxide. Gas ingredients present together with carbon dioxide includes oxygen, nitrogen, water, nitrogen oxide, sulfur oxide, etc. and the content of an acidic gas other than carbon dioxide is preferably lower for preventing poisoning of the CO₂ sorbent. With the viewpoint described above, a denitrating device and a desulfurizing device are preferably provided in a stage before the carbon dioxide sorbing device using the CO₂ sorbent. Further, for preventing deposition of dusts and ashes to the CO₂ sorbent, a dust collector device is preferably provided.

As examples of a carbon dioxide-containing gas, exhaust gases from boilers of thermal power stations, steel works, and cement plants may be considered.

The gas containing carbon dioxide may be at any temperature and preferably at a low temperature for decreasing desorption that occurs in parallel with carbon dioxide sorption and it is particularly preferably at 100°C or lower.

When carbon dioxide sorbed by using the CO₂ sorbent is desorbed and recovered, carbon dioxide can be desorbed and recovered efficiently by controlling the temperature of the CO₂ sorbent to 100°C or higher or 500°C or lower. A depressurizing device such as a vacuum pump can be used optionally. Carbon dioxide can be recovered further efficiently by depressurizing the periphery of the CO₂ sorbent and decreasing the partial pressure of carbon dioxide.

The method of increasing the temperature of the CO₂ sorbent includes, for example, use of a heating device such as an electric furnace, contact with a heated gas, etc. While any gas may be used for heating, it is preferred that the gas can be separated easily from carbon dioxide when it is intended to improve the purity of carbon dioxide to be recovered.

There are various methods of separating the gas described above and carbon dioxide, and a gas having a boiling point higher than that of carbon dioxide is used preferably. By cooling a gas mixture of the gas and carbon dioxide, only the gas can be condensed and carbon dioxide at high purity can be recovered. Steams are an example of such gases.

The present invention will be described specifically by way of examples.

### [Comparative Example 1]

18.61 g of cerium nitrate hexahydrate (Ce(NO₃)₃ • 6H₂O) was dissolved under stirring to 100 g of purified water at room temperature. An aqueous solution 2 in which 9.75 g of oxalic acid dihydrate (C₂O₄H₂ • 2H₂O) was dissolved in 100 g of purified water was dropped to the aqueous solution 1, and formed precipitates were collected by washing and filtration. After drying the precipitates in a drying furnace at 120°C, they were fired in an electric furnace in an atmospheric air at 400°C for one hour and the obtained Ce oxide was used as a CO₂ sorbent.

### [Example 1]

Cerium Oxide (manufactured by JGC Corporation) was used as a CO₂ sorbent.

### [Example 2]

Cerium oxide (HS, name of product manufactured by Daiichi Kigenso Kagaku Kogyo Co., Ltd.) was used as a CO₂ sorbent.

### [Example 3]

Cerium oxide (manufactured by Rhône-Poulenc S.A.) was used as a CO₂ sorbent.

### [Example 4]

26.05 g of cerium nitrate hexahydrate (Ce(NO₃)₃ • 6H₂O) was dissolved under vigorous stirring at a room temperature to 1080 g of purified water. 25% by weight of an aqueous ammonia solution was dropped while stirring to the aqueous solution to adjust pH to 9.0. After stirring for 8 hours, the solution was stood still for one hour, and precipitates were collected by washing and filtration. Then, the precipitates were dried in a drying furnace at 120°C and fired in an electric furnace in an atmospheric air at 400°C for one hour, and the obtained cerium oxide was used as a CO₂ sorbent.

### [Example 5]

26.05 g of cerium nitrate hexahydrate (Ce(NO₃)₃ • 6H₂O) and urea (CH₄N₂O) were dissolved under vigorous stirring at a room temperature to 540 g of purified water. After heating the aqueous solution to 90°C and stirring for 8 hours, they were stood still at room temperature for one hour. The precipitates were collected by washing and filtration. Then, the precipitates were dried in a drying furnace at 120°C, and fired in an electric furnace in atmospheric air at 400°C for one hour. The obtained cerium oxide was used as a CO₂ sorbent.

### [Example 6]

Cerium-potassium oxide obtained by the same preparation method as in Example 5 except for adding 23.45 g of cerium nitrate hexahydrate (Ce (NO₃)₃ • 6H₂O) and 0.61 g of potassium nitrate (K(NO₃)) instead of 26. 05 g of cerium nitrate hexahydrate (Ce(NO₃)₃ • 6H₂O) was used as a CO₂ sorbent.

### [Example 7]

Cerium-magnesium oxide obtained by the same preparation method as in Example 5 except for adding 23.45 g of cerium nitrate hexahydrate (Ce(NO₃)₃ • 6H₂O) and 1.54 g of magnesium nitrate hexahydrate (Mg(NO₃)₂ • 6H₂O) instead of 26.05 g of cerium nitrate hexahydrate (Ce(NO₃)₃ • 6H₂O) was used as a CO₂ sorbent.

### [Example 8]

Cerium-magnesium oxide obtained by the same preparation method as in Example 5 except for adding 13.03 g of cerium nitrate hexahydrate (Ce(NO₃)₃ • 6H₂O) and 7.69 g of magnesium nitrate hexahydrate (Mg(NO₃)₂ • 6H₂O) instead of 26.05 g of cerium nitrate hexahydrate (Ce(NO₃)₃ • 6H₂O) was used as a CO₂ sorbent.

### [Example 9]

Cerium-aluminum oxide obtained by the same preparation method as in Example 5 except for adding 23.45 g of cerium nitrate hexahydrate (Ce(NO₃)₃ • 6H₂O) and 2.25 g of aluminum nitrate hexahydrate (Al(NO₃) • 6H₂O) instead of 26.05 g of cerium nitrate hexahydrate (Ce(NO₃)₃ • 6H₂O) was used as a CO₂ sorbent.

### [Example 10]

Cerium-praseodymium oxide obtained by the same preparation method as in Example 5 except for adding 23.45 g of cerium nitrate hexahydrate (Ce(NO₃)₃ • 6H₂O) and 2.61 g of praseodymium nitrate hexahydrate (Pr(NO₃)₃ • 6H₂O) instead of 26.05 g of cerium nitrate hexahydrate (Ce(NO₃)₃ • 6H₂O) was used as a CO₂ sorbent.

In Comparative Example 1 and Examples 1 to 10, special grade reagents manufactured by Wako Junyaku Industry Co. were used for nitrate compounds, urea, and oxalic acid dihydrate.

A list of the CO₂ sorbents used is shown in Table 1.
[Table 1]

**Table 1**

| Specimen | Composition | Elemental ratio (molar ratio) |
|---|---|---|
| Comp. Example 1 | Ce oxide | - |
| Example 1 | Ce oxide | - |
| Example 2 | Ce oxide | - |
| Example 3 | Ce oxide | - |
| Example 4 | Ce oxide | - |
| Example 5 | Ce oxide | - |
| Example 6 | Ce-K oxide | K/Ce = 0.11 |
| Example 7 | Ce-Mg oxide | Mg/Ce = 0.11 |
| Example 8 | Ce-Mg oxide | Mg/Ce = 1.00 |
| Example 9 | Ce-Al oxide | Al/Ce = 0.11 |
| Example 10 | Ce-Pr oxide | Pr/Ce = 0.11 |

### (Evaluation Method for Specific Surface Area and Average Pore Size)

For CO₂ sorbents of Examples 1 to 10 and the comparative example, nitrogen adsorption isotherms were measured by using a BET method, to determine the specific surface area and the average pore size.

### (Evaluation Method for CO₂ sorbent)

The performance of the CO₂ sorbent was evaluated under the following conditions. CO₂ sorbents obtained in Examples 1 to 10 and Comparative Example 1 were molded in a granular shape of 0.5 to 1.0 mm and fixed in a tubular reactor made of quartz glass. After removing impurities by elevating the temperature of the CO₂ sorbent to 400°C while flowing He, a carbon dioxide pulse sorbing test was performed while keeping the temperature of the specimen at 50°C in an electric furnace and the amount of CO₂ sorption was measured. 10 mL of a gas mixture comprising 12% by volume of carbon dioxide and 88% by volume of helium was introduced as a sample gas in a pulsative manner for 2 min at each interval of 4 min, and the concentration of carbon dioxide at the exit of the tubular reactor was measured by gas chromatography. Pulse injection was performed till the amount of carbon dioxide measured at the exit of the tubular reactor was saturated. As the carrier gas, a helium gas was used.

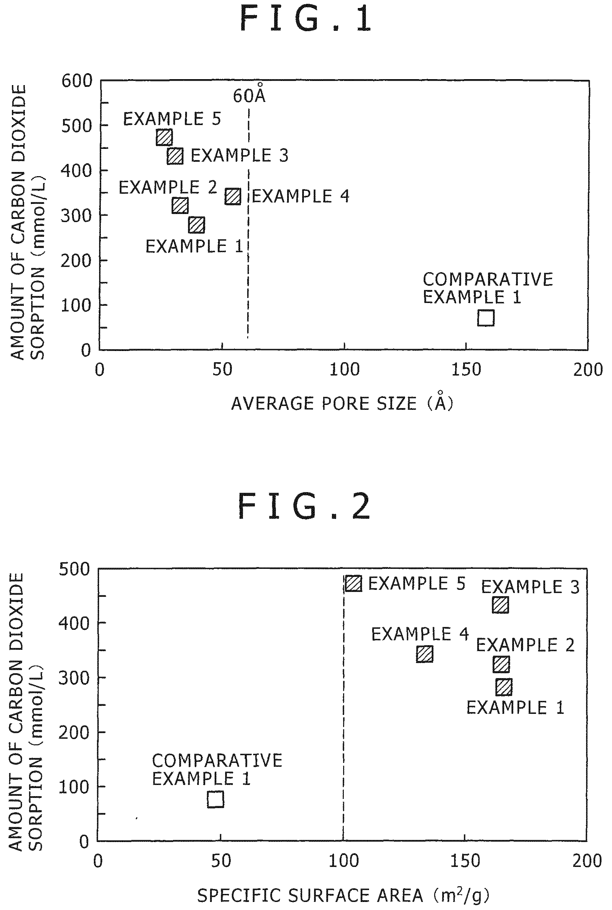

Fig. 1 shows a correlation between the average pore size and the amount of CO₂ sorption in Examples 1 to 5 and Comparative Example 1. It was found that the amount of carbon dioxide sorption was as high as 250 mmol/L or more for specimens with the average pore size of less than 60 Å.

Fig. 2 shows a correlation between the specific surface area and the amount of carbon dioxide sorption in Examples 1 to 5 and Comparative Example 1. It was found that the amount of carbon dioxide sorption was as high as 250 mmol/L or more in specimens having the specific surface area of greater than 100 m²/g.

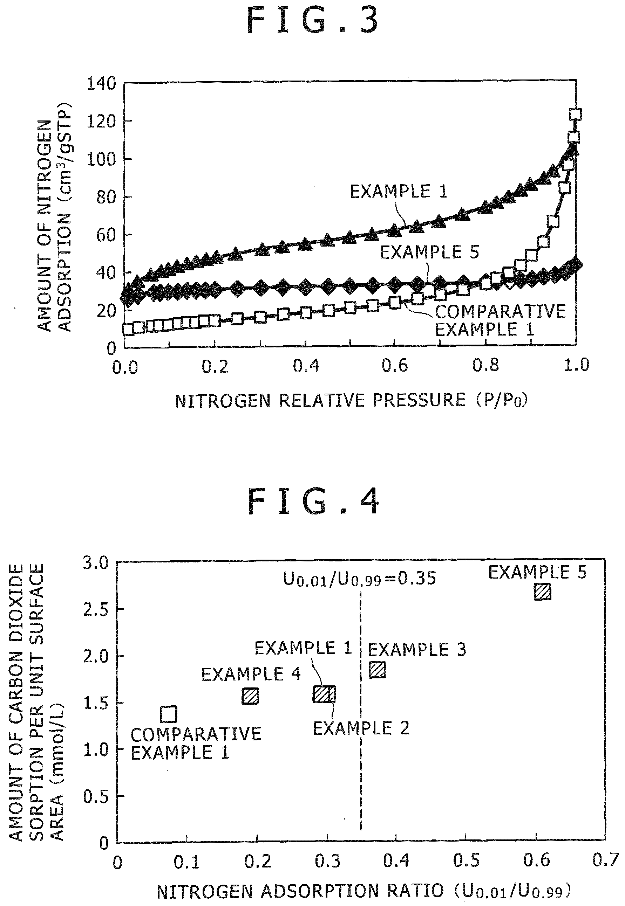

Fig. 3 shows nitrogen adsorption isotherms at -196°C in Examples 1, 5 and Comparative Example 1. It was found that increase in the nitrogen adsorption amount to nitrogen relative pressure P/P₀ is smaller in Example 5 compared with that in Example 1 and Comparative Example 1.

Relative ratios between the nitrogen adsorption amount (U_{0.01}) at P/P₀ = 0.01 and the nitrogen adsorption amount (U_{0.99}) at P/P₀ = 0.99 at -196°C in Examples 1 to 5 and Comparative Example 1 were calculated. Fig. 4 shows the relative ratio of the nitrogen adsorption amount and the amount of carbon dioxide sorption per unit surface area. It was found that as the relative ratio U_{0.01}/U_{0.99} of the nitrogen adsorption amount is larger, the amount of carbon dioxide sorption per unit surface area is larger and, particularly, the amount of carbon dioxide sorption per unit surface area was as large as 1.8 µmol/m² or more when U_{0.01}/U_{0.99} was 0.35 or more.

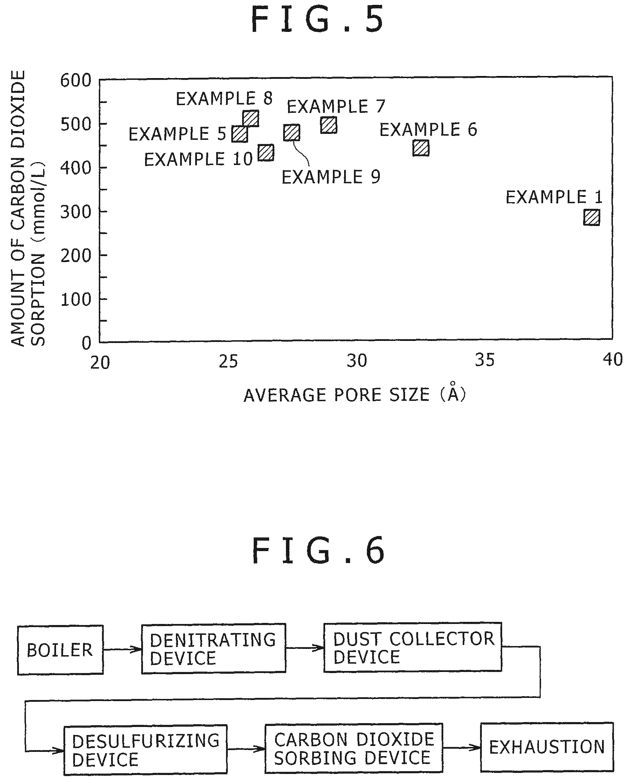

Fig. 5 shows a correlation between the average pore size and the amount of carbon dioxide sorption in Examples 1 and 5 to 10. It was found that, compared with that in Example 1, the amount of carbon dioxide sorption was as large as 400 mmol/L in Examples 6 to 10 comprising oxides containing Ce and, further, at least one element selected from K, Mg, Al, and Pr at an elemental ratio of 0.01 or more and 1.0 or less in view of the elemental ratio with Ce.

### [Example 11]

Fig. 6 is a flow showing recovery of carbon dioxide from a boiler exhaust gas using the CO₂ sorbent of the invention. A denitrating device, a dust collector device, a desulfurizing device, and a carbon dioxide sorbing device filled with the CO₂ sorbent of the invention are provided in an exhaust gas flow channel of the boiler. After sorbing carbon dioxide by the carbon dioxide sorbing device, the exhaust gas is discharged into atmospheric air. By disposing the carbon dioxide sorbing device at the downstream of the denitrating device, the dust collector device, and the desulfurizing device, the amount of Sox and NOx flowing into the carbon dioxide sorbing device can be decreased and poisoning of the sorbent due to the gases can be suppressed.

### [Example 12]

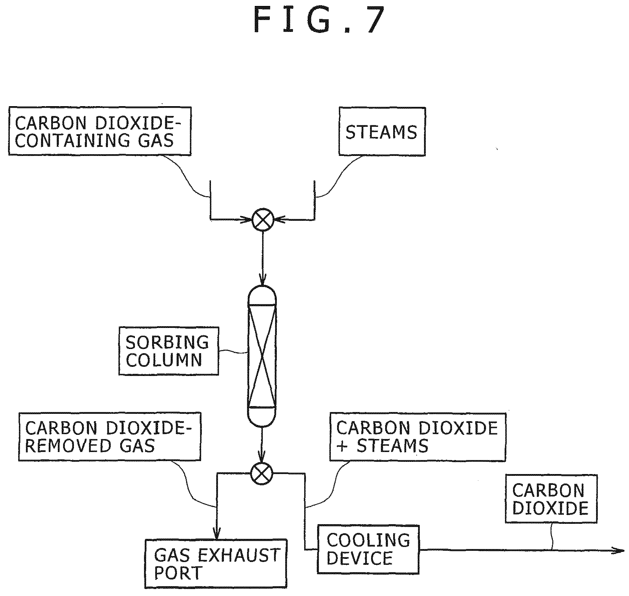

Fig. 7 shows an example of a system that sorbs and recovers carbon dioxide by using a sorbing column filled with the CO₂ sorbent of the invention. A flow channel switching valve is disposed each at the upstream and the downstream of the sorbing column. When carbon dioxide is sorbed from a gas containing carbon dioxide, the gas containing carbon dioxide is caused to flow to the sorbing column, sorbs carbon dioxide, and is discharged from the gas exhaust port at the downstream of the sorbing column. When carbon dioxide is desorbed from the sorbent, steams are caused to flow in the sorbing column to heat the sorbent. Then, a gas mixture of the steams and carbon dioxide is caused to flow to a cooling device to cool the gas temperature to 40°C or lower. When the steams are removed, carbon dioxide at high purity can be separated. Further, carbon dioxide can be sorbed and desorbed continuously by providing two or more sorbing columns and switching their flow channels alternately.

## Claims

1. A CO₂ sorbent for sorbing and separating carbon dioxide from a gas containing carbon dioxide, in which the CO₂ sorbent consists of an oxide containing Ce and further at least one element selected from K, Mg, and Al, and has an average pore size of 60 Å or less.

2. The CO₂ sorbent according to claim 1, wherein the CO₂ sorbent contains an element selected from K, Mg and Al by 0.01 or more and 1.00 or less by molar ratio in total based on Ce as elemental metal.

3. A carbon dioxide sorbing device using the CO₂ sorbent according to claim 1.

4. The carbon dioxide sorbing device according to claim 3, wherein a desulfurizing device is disposed at a preceding stage.

5. The carbon dioxide sorbing device according to claim 3, wherein a dust collector device is disposed at a preceding stage.

6. The carbon dioxide sorbing device according to claim 3, wherein a denitrating device is disposed at a preceding stage.

7. A method for sorbing and separating carbon dioxide from a gas containing carbon dioxide, which comprises bringing the CO₂ sorbent according to claim 1 or 2 in contact with a gas containing carbon dioxide.

8. The method according to claim 7, wherein the gas containing carbon dioxide is a gas exhausted from a heat engine.

9. The carbon dioxide sorbing method according to claim 7 or 8 used in the CO₂ sorbing device according to claim 3, wherein the method includes a step of desorbing the sorbed carbon dioxide by heating the CO₂ sorbent.

10. The method of recovering carbon dioxide according to claim 9, wherein the CO₂ sorbent is heated by causing a heating gas to flow upon heating the CO₂ sorbent.

11. The method of recovering carbon dioxide according to claim 10, wherein the CO₂ sorbent is heated by causing steams to flow therethrough upon heating the CO₂ sorbent.

## Patentansprüche

1. CO₂-Sorptionsmittel zum Sorbieren und Abtrennen von Kohlendioxid aus einem kohlendioxidhaltigen Gas, wobei das CO₂-Sorptionsmittel aus einem Ce enthaltenden Oxid und ferner zumindest einem unter K, Mg und Al ausgewählten Element besteht und eine mittlere Porengröße von 60 Å oder weniger aufweist.

2. CO₂-Sorptionsmittel nach Anspruch 1, wobei das CO₂-Sorptionsmittel ein unter K, Mg und Al ausgewähltes Element insgesamt in einem Molverhältnis von 0,01 oder mehr und 1,00 oder weniger, bezogen auf Ce als elementares Metall, aufweist.

3. CO₂-Sorptionsvorrichtung, bei der das CO₂-Sorptionsmittel nach Anspruch 1 verwendet wird.

4. CO₂-Sorptionsvorrichtung nach Anspruch 3, wobei eine Entschwefelungsvorrichtung in einer vorhergehenden Stufe angeordnet ist.

5. CO₂-Sorptionsvorrichtung nach Anspruch 3, wobei ein Staubabscheider in einer vorhergehenden Stufe angeordnet ist.

6. CO₂-Sorptionsvorrichtung nach Anspruch 3, wobei eine DenitrierungsVorrichtung in einer vorhergehenden Stufe angeordnet ist.

7. Verfahren zum Sorbieren und Abtrennen von Kohlendioxid aus einem kohlendioxidhaltigen Gas, das umfasst, das CO₂-Sorptionsmittel gemäß Anspruch 1 oder 2 mit einem kohlendioxidhaltigen Gas in Kontakt zu bringen.

8. Verfahren nach Anspruch 7, wobei das kohlendioxidhaltige Gas ein von einer Wärmekraftmaschine ausgestoßenes Gas ist.

9. Kohlendioxid-Sorptionsverfahren nach Anspruch 7 oder 8, das in der CO₂-Sorptionsvorrichtung nach Anspruch 3 verwendet wird, wobei das Verfahren einen Schritt zum Desorbieren des sorbierten Kohlendioxids durch Erwärmen des CO₂-Sorptionsmittels umfasst.

10. Verfahren zur Rückgewinnung von Kohlendioxid nach Anspruch 9, wobei das CO₂-Sorptionsmittel erwärmt wird, indem beim Erwärmen ein Heizgas über das CO₂-Sorptionsmittel strömen gelassen wird.

11. Verfahren zur Rückgewinnung von Kohlendioxid nach Anspruch 10, wobei das CO₂-Sorptionsmittel erwärmt wird, indem beim Erwärmen des O₂-Sorptionsmittels durch dieses Dämpfe geleitet werden.

## Revendications

1. Sorbant de CO₂ pour la sorption et la séparation de dioxyde de carbone d'un gaz contenant du dioxyde de carbone, dans lequel le sorbant de CO₂ est constitué d'un oxyde contenant Ce et en outre au moins un élément choisi parmi K, Mg et Al, et a une dimension de pore moyenne de 60 Å ou moins.

2. Sorbant de CO₂ selon la revendication 1, dans lequel le sorbant de CO₂ contient un élément choisi parmi K, Mg et Al à hauteur de 0,01 ou plus et 1,00 ou moins en rapport molaire au total par rapport à Ce en tant que métal élémentaire.

3. Dispositif de sorption de dioxyde de carbone faisant appel au sorbant de CO₂ selon la revendication 1.

4. Dispositif de sorption de dioxyde de carbone selon la revendication 3, dans lequel un dispositif de désulfuration est disposé à un étage précédent.

5. Dispositif de sorption de dioxyde de carbone selon la revendication 3, dans lequel un dispositif collecteur de poussière est disposé à un étage précédent.

6. Dispositif de sorption de dioxyde de carbone selon la revendication 3, dans lequel un dispositif de dénitration est disposé à un étage précédent.

7. Procédé de sorption et de séparation de dioxyde de carbone d'un gaz contenant du dioxyde de carbone, qui comprend le fait d'amener le sorbant de CO₂ selon la revendication 1 ou 2 en contact avec un gaz contenant du dioxyde de carbone.

8. Procédé selon la revendication 7, dans lequel le gaz contenant du dioxyde de carbone est un gaz évacué d'un moteur thermique.

9. Procédé de sorption de dioxyde de carbone selon la revendication 7 ou 8, utilisé dans le dispositif de sorption de CO₂ selon la revendication 3, dans lequel le procédé comporte une étape de désorption du dioxyde de carbone sorbé par chauffage du sorbant de CO₂.

10. Procédé de récupération de dioxyde de carbone selon la revendication 9, dans lequel le sorbant de CO₂ est chauffé en amenant un gaz chauffant à circuler lors du chauffage du sorbant de CO₂.

11. Procédé de récupération de dioxyde de carbone selon la revendication 10, dans lequel le sorbant de CO₂ est chauffé en amenant des vapeurs à circuler à travers celui-ci lors du chauffage du sorbant de CO₂.
